# FASCICULE DE BREVET EUROPEEN

(11) **EP 1 924 843 B1**
(45) Date de publication et mention de la délivrance du brevet: **19.02.2020**
(21) Numéro de dépôt: 06808147.0
(22) Date de dépôt: 15.09.2006
(51) Int. Cl.: G01N 21/77, G01N 31/22, G01N 33/28, G01N 21/64, G01N 21/78

(54) **Procédé, matériau et capteur de détection, de dosage et/ou de piégeage d'un aldéhyde, et procédé de préparation du matériau.**
Verfahren, Material und Sensor zum Detektieren, Dosieren und / oder Abfangen eines Aldehyds, sowie Verfahren zur Herstellung des Materials.
Process, material and sensor for detecting, dosing and / or trapping an aldehyde, and process for preparing the material.

(30) Priorité: 15.09.2005 FR 0509445
(43) Date de publication de la demande: 28.05.2008
(73) Titulaire: Commissariat à l'Énergie Atomique et aux Énergies Alternatives, 75015 Paris (FR); Centre National de la Recherche Scientifique (C.N.R.S.), 75794 Paris Cedex 16 (FR); Université Paris Sud (Paris XI), 91405 Orsay Cedex (FR)
(72) Inventeur: PAOLACCI, Hélène, F-75011 Paris (FR); TRAN-THI, Thu-Hoa, F-77310 St. Fargeau-Ponthierry (FR)
(74) Mandataire: Icosa
(86) Numéro de dépôt international: PCT/FR2006/002124
(87) Numéro de publication internationale: WO 2007/031657

(56) Documents cités:
- WO-A-2004/104573
- US-B1- 6 235 532
- US-B1- 6 500 921
- INGERSOLL CHRISTINE M ; BRIGHT FRANK V: "USING SOL-GEL-BASED PLATFORMS FOR CHEMICAL SENSORS" CHEMTECH, WASHINGTON, DC, US, vol. 27, no. 1, janvier 1997 (1997-01), pages 26-31, XP002060846 ISSN: 0009-2703
- Bruce Jon Compton ET AL: "Fluoral-P, a member of a selective family of reagents for aldehydes", ANALYTICA CHIMICA ACTA, vol. 119, no. 2, 1 October 1980 (1980-10-01), pages 349-357, XP055287942, NL ISSN: 0003-2670, DOI: 10.1016/S0003-2670(01)93636-0

## Description

La présente invention est relative au domaine de la métrologie des aldéhydes, par exemple dans des environnements contaminés, ainsi qu'à la dépollution desdits environnements. L'environnement peut être une atmosphère extérieure ou intérieure (e.g. domestique), contaminé ou non par au moins un aldéhyde, préférentiellement le formaldéhyde.

Plus particulièrement, elle concerne un nouveau matériau apte à réagir avec au moins un aldéhyde gazeux, préférentiellement le formaldéhyde, ainsi que son procédé de préparation sol-gel.

Elle concerne également une méthode de détection et/ou de quantification et/ou de piégeage d'au moins un aldéhyde gazeux, notamment le formaldéhyde, basée sur des mesures de variation d'au moins une propriété physico-chimique dudit matériau.

Elle concerne enfin la mise en oeuvre de ces nouveaux matériaux dans des capteurs à transduction optique pouvant être exploités pour une métrologie des aldéhydes dans un environnement, ainsi que des dispositifs permettant la dépollution.

Par « aldéhyde », on désigne toute molécule organique ayant une fonction carbonyle terminale choisie de préférence parmi le formaldéhyde, l'acétaldéhyde, le propionaldéhyde, le butyraldéhyde, l'acroléine, le pentanal, l'hexanal et le benzaldéhyde.

Lorsque la notion de pollution est abordée, il est classique de se référer à la pollution de l'air extérieur. D'ailleurs, la plupart des enquêtes épidémiologiques entreprises pour établir des corrélations entre la pollution et l'apparition de maladies respiratoires ne font le plus souvent intervenir que des polluants mesurés à l'extérieur des habitations. Cependant, la majorité des individus passe la plus grande partie de son temps à l'intérieur. La qualité de l'air intérieur apparaît donc particulièrement importante du point de vue de la santé et du bien-être.

Ce n'est que récemment que des études ont évoqué la possibilité du rôle des polluants chimiques de l'environnement intérieur dans l'augmentation de la prévalence des maladies respiratoires.

Les aldéhydes comptent parmi les polluants chimiques domestiques les plus abondants. Leurs sources sont extrêmement nombreuses. Elles peuvent être notamment en relation avec une production extérieure comme la photooxydation du méthane. Cependant, les sources principales d'émission des aldéhydes se trouvent à l'intérieur des habitations et sont très diverses :
- les résines et les colles servant à fabriquer les bois agglomérés, les panneaux de particules et les contreplaqués,
- les mousses isolantes urée-formol utilisées comme isolant thermique, par injection dans les murs et les cloisons,
- dans les revêtements textiles, papiers peints, peintures, cuirs...

Le formaldéhyde est également un agent conservateur, désinfectant et déshydratant. Pour ces raisons, il est abondamment employé comme solvant en milieu hospitalier pour la désinfection des instruments chirurgicaux mais aussi dans l'industrie des services funéraires où l'on pratique la thanatopraxie.

Le formaldéhyde est le plus étudié des aldéhydes car largement utilisé dans la fabrication de très nombreux produits de construction et de divers équipements. Le dégagement de formaldéhyde varie en fonction des conditions de température et d'humidité. Son odeur piquante est détectée par l'homme à basse concentration (de 0,048 à 0,176 ppm soit de 0,06 à 0,22 mg.m⁻³). Une irritation par exposition au formaldéhyde est ressentie par la plus grande partie de la population à des concentrations comprises entre 1 et 3 ppm, celle-ci s'aggravant rapidement lorsque le taux s'élève. La plupart des individus ne peuvent, en effet, tolérer une exposition prolongée à 4-5 ppm. A 10-20 ppm, des signes d'irritation sévère des muqueuses oculaires et des voies respiratoires surviennent dès le début de l'exposition. Un séjour, même bref, dans une atmosphère où la concentration en formaldéhyde est supérieure à 50 ppm peut être responsable de troubles graves de l'appareil respiratoire (oedème aigu pulmonaire, ulcérations trachéales et bronchiques...). En raison de risques à long terme, le formaldéhyde a été classé cancérogène par le Centre International de Recherche sur le Cancer.

Par conséquent, la législation nationale française a évolué de telle sorte qu'il est aujourd'hui recommandé de ne pas dépasser une teneur de formaldéhyde de 0,2 ppm, soit 0,25 mg.m⁻³ dans les habitations isolées à l'aide de mousses urée-formol. Par ailleurs, l'Organisation Mondiale pour la Santé (OMS) recommande que la concentration de formaldéhyde n'excède pas 0,080 ppm, soit 0,1 mg.m⁻³, pour une exposition de 30 minutes, cette valeur correspondant à une magnitude inférieure à un ordre de grandeur à celle pour laquelle des dommages risquent d'apparaître.

Compte tenu des effets nocifs de tels polluants chimiques sur la santé publique, il apparaît nécessaire de mesurer et de contrôler les teneurs en aldéhydes, dont notamment en formaldéhyde dans les environnements contaminés, qu'ils soient extérieurs ou intérieurs, et d'offrir de nouveaux dispositifs de dépollution.

Les procédés de détection déjà commercialisés sont basés sur le piégeage des aldéhydes par réaction avec une molécule adaptée, puis leur analyse chromatographique en phase gazeuse ou liquide.

Dans certains procédés, l'aldéhyde, dont notamment le formaldéhyde, est piégé sur un absorbeur ou un support solide (silice ou silice greffée octadécyle) imprégné d'un réactif comme la 2,4-dinitrophénylhydrazine (DNPH) ou la 2-hydroxyméthylpipéridine, capable de réagir avec l'aldéhyde pour former un produit, une hydrazone ou une oxazolidine. Par exemple, la méthode NIOSH 2451 consiste en un prélèvement du formaldéhyde sur un absorbant solide imprégné de 2-hydroxyméthylpipéridine suivi d'une analyse chromatographie en phase gazeuse. Les limites de détection de cette méthode sont de 0,01 à 38 ppmv.

En raison de la non spécificité des ces réactifs pour le formaldéhyde, les procédés précités ne permettent une détection du formaldéhyde que lorsque l'étape de piégeage est couplée à une analyse chromatographie en phase gazeuse ou liquide qui permet de différencier les différents produits de réaction.

Nash fut le premier à identifier un mélange de réactifs capables de réagir spécifiquement en solution avec le formaldéhyde. Ces réactifs sont une β-dicétone, par exemple l'acétylacétone et l'acétate d'ammonium. Ils donnent lieu à la formation d'un dérivé fortement fluorescent, la 3,5-diacétyl-2,6-dihydrolutidine (DDL) [Nash T., Biochem. J., 55, 416, (1953)]. Sawicki et al. ont ensuite étendu cette réaction à d'autres cétones tels que la dimédone [Sawicki E. et al., Mikrochim. Acta, 148, (1968) ; Sawicki E. et al., Mikrochim. Acta, 602, (1968)]. Dans ce cas, le produit final est la 3,3,6,6-tétraméthyl-1,2,3,4,5,6,7,8,9,10-décahydro-1,8-acridinédione, dont la fluorescence est bien plus élevée que celle de la DDL.

En étudiant le mécanisme de formation de la 3,5-diacétyl-2,6-dihydrolutidine, il a été découvert qu'un intermédiaire de la réaction, la 4-amino-3-pentèn-2-one ou Fluoral-P, était capable de réagir rapidement et quantitativement avec le formaldéhyde [Compton B. J. ;Purdy W. C., Can. J. chem., 58 (1980) 2207-2211]. Toutefois, la spécificité du Fluoral-P pour le formaldéhyde, en solution, semble discutable puisque des aldéhydes de taille modeste (jusqu'à environ 10 carbones) sont également capables de réagir rapidement avec le Fluoral-P [Compton, B. R. ; Purdy, W.C., Anal. Chem. Acta, 119 (1980) 349-357].

Des procédés de détection basés sur des systèmes de piégeage mixte solide-liquide et mettant en œuvre le Fluoral-P ont été développés. L'un de ces systèmes met en œuvre des méthodes d'injection du Fluoral-P et du formaldéhyde sous flux liquide suivies d'une rétention du produit formé sur un support de silice greffé de type C18 imprégné du solvant d'élution. Selon cette méthode, l'analyse est effectuée par absorbance ou par fluorescence [Teixera, L. S. G. ; et al., Talanta, 64 (2004) 711-715.].

Une bonne sensibilité peut être obtenue par ces procédés de détection. Toutefois, ils ont l'inconvénient de ne pas permettre la détection directe des aldéhydes sous forme de gaz.

Récemment, il a été montré que la 4-amino-4-phénylbut-3-ène-2-one pouvait être utilisée en solution comme réactif spécifique du formaldéhyde pour former un dérivé de lutidine [Suzuki Y., Nakano N, Suzuki K., Environ. Sci. Technol., (2003), 37, 5695-5700]. Les auteurs ont utilisé un dispositif comprenant un papier filtre de cellulose recouvert de granules de silice et imprégné de 4-amino-4-phénylbut-3-ène-2-one,. La détection colorimétrique du dérivé de lutidine a été réalisée par réflectance car le papier filtre n'est pas transparent. La sensibilité obtenue était de 5 ppb avec un temps de réponse de 15 minutes. Cette méthode a le désavantage d'être relativement sensible au taux d'humidité ambiant et à la température. En effet, les mesures sont altérées lorsque le taux d'humidité est en dehors d'une plage de 30-70%, et/ou lorsque la température dépasse 35°C. Par ailleurs, au-delà de six mois de conservation, une diminution de la sensibilité du papier imprégné est observée. La présence des granules de silice qui ont la particularité d'attirer et de maintenir l'humidité par phénomène de capillarité permet d'expliquer, du moins en partie, le fait que le taux d'humidité ambiant influence cette méthode.

WO 2004/104573 décrit un capteur capable de détecter le formaldéhyde dans une atmosphère, consistant en un gel généralement polysaccharidique à base par exemple de gommes xanthane ou arabique, de pectine, d'amidon, d'agar, ou d'acide alginique, le gel comprenant une base de Schiff comme la pararosaniline, de l'acide sulfurique ou un de ses sels, un autre acide pour ajuster à pH 3, et de l'eau.

US-A-6 235 532 décrit un procédé de détection dans l'huile du 2-furaldéhyde à l'aide d'acétate d'aniline. La détection est effectuée à l'aide d'une matrice poreuse sol-gel, notamment de méthyltriméthoxysilane, contenant l'acétate d'aniline.

Un des principaux problèmes des procédés de l'art antérieur est qu'ils ne permettent pas la détection et/ou la quantification directe et in situ du formaldéhyde ou des autres aldéhydes sous forme gazeuse quelles que soient les conditions de l'environnement. Certains procédés de l'art antérieur nécessitent le prélèvement d'échantillons et le piégeage du gaz en phase liquide/solide pour permettre une analyse qualitative et/ou quantitative. D'autres procédés de l'art antérieur sont fortement sensibles au taux d'humidité ambiante ou à la température.

La présente invention a donc pour objet un procédé de détection et/ou de dosage et/ou de piégeage d'au moins un aldéhyde, préférentiellement le formaldéhyde qui comprend une étape de mise en contact d'un flux gazeux avec un matériau comprenant une matrice nanoporeuse sol-gel d'oxydes métalliques, ladite matrice contenant au moins une molécule sonde portant au moins une fonction réactive pouvant réagir avec une fonction aldéhyde, ladite fonction réactive étant choisie parmi les énaminones et les couples beta-dicétone/amine correspondants ou les sels dérivés de ces composés.

Le procédé de la présente invention est définie dans la revendication indépendante 1.

Avantageusement, l'aldéhyde est choisi parmi le formaldéhyde, l'acétaldéhyde, le propionaldéhyde, le butyraldéhyde, l'acroléine, le pentanal, l'hexanal et le benzaldéhyde.

Par « flux gazeux », on entend également une atmosphère gazeuse ou un mélange de gaz.

Par « nanoporeux », on entend un système poreux avec des diamètres de pores inférieurs à 100 nm.

Par « procédé de piégeage », on entend un procédé de dépollution ou de décontamination qui permet de capturer l'aldéhyde et ainsi de purifier un environnement contaminé.

Selon un mode préféré de réalisation de l'invention, le procédé comprend en outre une étape d'analyse de la variation des propriétés spectrales d'au moins une molécule sonde du matériau, par exemple par au moins une technique de spectrophotométrie. Le procédé conforme à l'invention met donc à profit les propriétés spectrales des molécules sondes ayant réagi avec au moins un aldéhyde. Il est pour cela souhaitable d'exposer le matériau à l'environnement à tester, ledit matériau étant avantageusement déposé sur un substrat adapté. Les spectres d'absorbance et/ou de fluorescence de la molécule sonde avant et après réaction possible avec l'aldéhyde seront avantageusement comparés pour déterminer la présence ou l'absence et/ou la quantité d'aldéhyde présent dans l'environnement testé.

Par ailleurs, la méthode permet également d'analyser les variations spectrales globales du matériau durant la réaction de la molécule sonde avec au moins un aldéhyde. Avantageusement, l'homme du métier choisira de déterminer la variation de la fluorescence ou celle de l'absorbance en fonction de l'aldéhyde à détecter et/ou quantifier.

Selon un mode particulier de réalisation il est possible d'employer des plasmons de surface afin d'exalter les variations des propriétés optiques des molécules sondes. En effet, des molécules sondes excitées, par irradiation lumineuse, à proximité d'une fine couche de métal peuvent se coupler aux plasmons de surface et conduire à des limites de détection moindre et permettre ainsi de détecter ou doser de plus faible quantités d'aldéhyde.

Selon un autre mode de réalisation le matériau avant et/ou après réaction avec un aldéhyde est caractérisée par son interaction avec des ondes de type Love. Les modifications structurales liées à la réaction des molécules sondes avec les aldéhydes entrainent notamment une variation de masse, de viscoélasticité, ou encore de constante diélectrique qui a une incidence sur les ondes de type Love. Ce mode de réalisation est généralement mis en œuvre en présence d'un matériau piezoélectrique ou sur lequel il est possible de détecter et générer des ondes de type Love, typiquement à l'aide d'électrodes en peignes interdigités selon une configuration de ligne à retard ou de résonateur.

La molécule sonde incorporée au matériau du procédé conforme à l'invention est une énaminone. Par « énaminone », on entend toute molécule qui répond à la formule (I) : 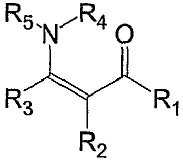 dans laquelle,
R₁ correspond à un hydrogène, un radical alkyle ou aryle,
R₂ correspond à un hydrogène,
R₃ correspond à un hydrogène, un radical alkyle ou aryle,
R₄ correspond à un hydrogène, un radical alkyle ou aryle,
R₅ correspond à un hydrogène.

Un radical alkyle peut être éventuellement mono- ou polysubstitué, linéaire, ramifié ou cyclique, saturé ou insaturé, en C₁-C₂₀, préférentiellement en C₁-C₁₀, le ou les substituants pouvant contenir un ou plusieurs hétéroatomes tels que N, O, F, Cl, P, Si ou S. Parmi de tels radicaux alkyle, on peut notamment citer les radicaux méthyle, éthyle, propyle, isopropyle, butyle, isobutyle, tert-butyle et pentyle. On peut également citer parmi les radicaux alkyles insaturés les éthényles, propényles, isopropényles, butényles, isobutényles, tert-butényles, pentényles et acétylényles.

Un radical aryle peut être une structure carbonée aromatique ou hétéroaromatique, mono- ou polysubstituée, constituée d'un ou plusieurs cycles aromatiques ou hétéroaromatiques comportant chacun de 3 à 8 atomes, l'hétéroatome pouvant être N, O, P ou S.

Optionnellement, lorsque les radicaux alkyle ou aryle sont polysubstitués, les substituants peuvent être différents les uns des autres. Parmi les substituants des radicaux alkyle et aryle, on peut notamment citer les atomes d'halogène, les groupes alkyles, haloalkyles, aryles substitués ou non, hétéroaryles substitués ou non, amino, cyano, azido, hydroxy, mercapto, céto, carboxy, étheroxy et alcoxy comme méthoxy.

Avantageusement, R₁ et R₃ sont indépendamment un radical méthyle, éthyle, isopropyle, butyle, isobutyle, tert-butyle, pentyle ou phényle et R4 un hydrogène. Avantageusement, R₁ est un radical méthyle, R₂ un hydrogène, R₃ un radical méthyle ou phényle et R₄ un hydrogène.

Selon un mode de réalisation particulièrement préféré, l'énaminone choisie comme molécule sonde est la 4-amino-3-pentèn-2-one (Fluoral-P) en raison de sa grande spécificité pour le formaldéhyde. Le Fluoral-P a un spectre d'absorption (λₘₐₓ = 302 nm) distinct de celui du produit de réaction, la DDL (λ_{max 1} = 206 nm et λ_{max 2} = 415 nm). Dans ce cas, la détection peut être avantageusement réalisée en mesurant la variation de l'absorbance à une longueur d'onde de 415 nm, à laquelle seule la DDL absorbe. Par ailleurs, la DDL ayant des propriétés de fluorescence, sa détection et son dosage peuvent être réalisés en l'excitant notamment à 415 nm, et en mesurant l'intensité de fluorescence à une longueur d'onde donnée (λₘₐₓ de fluorescence à 502 nm) ou la fluorescence totale (intégrée sur tout le spectre) en fonction du temps.

Le couple β-dicétone/amine correspondant à l'énaminone précédemment décrite peut également être considéré comme une molécule sonde à part entière. La forme énol de la β-dicétone est considérée comme une forme équivalente ; il est usuel, en effet, de trouver un équilibre thermodynamique entre ces deux formes. Les mécanismes de réaction n'étant pas exactement élucidés, il apparaît qu'un couple β-dicétone/amine correspondant à l'énaminone précédemment décrite réagira avec un aldéhyde, et de préférence avec le formaldéhyde. Par « couple β-dicétone/amine », on entend tout couple de molécules qui répond à la formule (II) : 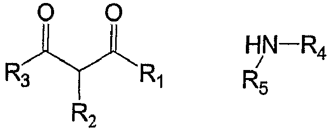
dans laquelle R₁, R₂, R₃, R₄ et R₅ ont la signification déjà indiquée ci-dessus,
l'aminé pouvant être remplacée par son sel d'ammonium correspondant.

L'amine peut être quaternisée et alors le contre-ion peut être choisi parmi les contre-ions connus de l'homme du métier et les mieux adaptés aux réactifs. Parmi les sels d'ammonium préférés, on peut notamment citer les acétates, les sulfates, les halogénures, et particulièrement les chlorures et les tétrafluoroborates.

La molécule sonde portant une fonction réactive pouvant réagir avec au moins un aldéhyde est incorporée au sein d'une matrice sol-gel nanoporeuse d'oxydes métalliques. Par «matrice sol-gel nanoporeuse d'oxydes métalliques», on entend un réseau polymérique nanoporeux élaboré à partir d'au moins un oxyde métallique de formule (IV) :

M(X)ₘ(OR₈)ₙ(R₉)ₚ

dans laquelle :
M correspond à un métal choisi parmi le silicium, l'aluminium, le titane,
le zirconium, le niobium, le vanadium, l'yttrium et le cérium,
R₈ et R₉ correspondent indépendamment à un radical alkyle ou aryle tel que défini ci dessus,
n, m et p sont des entiers, tels que leur somme soit égale à la valence de M et que n soit supérieur ou égal à 2,
X est un halogène, de préférence le chlore.

Selon un mode préféré de réalisation, le métal M de l'oxyde précurseur de la matrice sol-gel est du silicium ou du zirconium.

Selon un mode particulièrement préféré de réalisation, l'oxyde métallique est Si(OMe)₄.

Par ailleurs, les inventeurs ont mis en évidence que le choix de l'oxyde métallique constituant la matrice poreuse conditionne la taille des pores et l'accessibilité des aldéhydes aux molécules sondes. Ainsi, il est préférable d'utiliser des matrices élaborées à partir d'oxydes métalliques de formule générale (III) pour lesquels R₈ et R₉ sont des alkyles et de préférence des radicaux méthyles ou éthyles afin de détecter et/ou de doser spécifiquement le formaldéhyde. En revanche, pour un procédé de piégeage d'un aldéhyde dans un environnement contaminé, la taille des pores sera avantageusement plus importante afin de faciliter la dispersion du milieu gazeux au sein de la matrice.

Selon un mode particulier, afin de rendre le réseau nanoporeux plus hydrophobe, il est préférable que p soit au moins égal à 1.

Pour la mise en œuvre du procédé ci-dessus, les inventeurs ont mis au point de nouveaux matériaux aptes à réagir avec au moins un aldéhyde. C'est pourquoi la présente invention a également pour objet un matériau apte à réagir avec au moins un aldéhyde gazeux comprenant une matrice nanoporeuse sol-gel contenant au moins une molécule sonde portant une fonction réactive avec une fonction aldéhyde.

Dans des conditions préférentielles de l'invention, le matériau est caractérisé comme indiqué ci-dessus.

Préférentiellement, les radicaux R₈ et R₉ de l'oxyde métallique précurseur de la matrice nanoporeuse sol-gel sont indépendamment des radicaux méthyles ou éthyles et la molécule sonde est une énaminone.

Plus préférentiellement, le matériau conforme à l'invention comprend comme oxyde métallique un polymère de SiO₂, préparé avantageusement à partir de Si(OMe)₄, et le Fluoral-P comme molécule sonde. Un tel matériau est particulièrement avantageux pour la détection et/ou le dosage spécifique du formaldéhyde gazeux.

L'invention concerne également un procédé de préparation du matériau ci-dessus comprenant :
(a) une étape d'élaboration d'une matrice nanoporeuse sol-gel par polymérisation d'au moins un oxyde métallique tel que défini ci-dessus,
(b) une étape d'incorporation dans ladite matrice nanoporeuse sol-gel ou dans ledit au moins un oxyde métallique d'au moins une molécule sonde telle que définie ci-dessus.

La matrice sol-gel du matériau conforme à l'invention peut être élaborée selon un procédé sol-gel. Sous l'appellation générique « procédé sol-gel », on regroupe des techniques qui permettent par simple polymérisation de précurseurs moléculaires, dont notamment les oxydes métalliques, d'obtenir des matrices polymériques à des températures proches de la température ambiante (20 à 35°C). Les réactions chimiques, i.e. l'hydrolyse et la condensation, à la base des procédés sol-gel, sont déclenchées lorsque les précurseurs moléculaires sont mis en présence d'eau : l'hydrolyse des oxydes intervient tout d'abord, puis la condensation des produits hydrolysés conduit à la gélification de la matrice.

Selon un mode préféré de réalisation du procédé conforme à l'invention, l'étape d'élaboration de la matrice sol-gel poreuse (a) comporte une étape d'hydrolyse d'au moins un oxyde métallique, ladite étape d'hydrolyse étant de préférence réalisée en présence d'un solvant organique, tel qu'un alcool comme le méthanol ou l'éthanol. Avantageusement, l'étape d'hydrolyse est réalisée à un pH inférieur à 7 à l'aide d'acide inorganique comme le HCl ou le H₂SO₄.

Lors de la condensation, les produits hydrolysés réagissent entre eux pour former des polymères qui ne cessent de s'accroître jusqu'à l'obtention d'un réseau polymérique tridimensionnel. Dans un premier temps, les amas d'oxyde métallique restent en suspension sans précipiter, c'est le sol. Ces amas occupent progressivement une fraction volumique de plus en plus importante. La viscosité devient alors importante et le liquide finit par se gélifier en matrice. La matrice ainsi obtenue est donc constituée d'un réseau polymérique qui présente une porosité que l'on peut faire varier.

Avantageusement, le diamètre des pores de la matrice sol-gel peut également être adapté en sélectionnant des oxydes métalliques particuliers. Les inventeurs considèrent notamment que des oxydes métalliques de formule (IV) pour lesquels R₈ et R₉ sont des alkyles, de préférence des radicaux méthyles ou éthyles permettent de générer des matrices dont les pores ont un diamètre réduit. Lorsque l'on souhaite détecter un aldéhyde de petite taille, notamment le formaldéhyde, il devient alors particulièrement avantageux d'élaborer une matrice ayant des pores d'un diamètre réduit qui piègeront spécifiquement l'aldéhyde de petite taille, et plus particulièrement le formaldéhyde.

Avantageusement, l'étape d'élaboration de la matrice sol-gel (a) et celle d'incorporation d'au moins une molécule sonde (b) seront réalisées simultanément. En effet, les conditions de préparation sont suffisamment douces pour que les molécules sondes soient incorporées dans la matrice sol-gel sans être altérées.

Selon un mode préféré de réalisation, le procédé conforme à l'invention comprend en outre une étape d'homogénéisation et/ou de séchage. L'étape de séchage permet entre autres l'évaporation de l'eau et des alcools de la matrice. Avantageusement, l'incorporation d'au moins une molécule sonde est prévue avant l'étape d'homogénéisation, plus préférentiellement pendant l'étape d'hydrolyse.

Selon un autre mode préféré de réalisation, l'incorporation d'au moins une molécule sonde pourra se faire dans la matrice nanoporeuse également par imprégnation en solution ou en phase vapeur selon des techniques bien connues de l'homme du métier, dont notamment la sublimation.

Pour la mise en oeuvre du procédé de détection et/ou de dosage et/ou de piégeage d'au moins un aldéhyde, le matériau conforme à l'invention peut être intégré dans des dispositifs ou capteurs. La présente invention concerne donc également tout dispositif ou capteur spécifique d'aldéhydes gazeux, préférentiellement de formaldéhyde, caractérisée en ce qu'il comprend au moins un matériau conforme à l'invention ou obtenu selon le procédé de préparation conforme à l'invention.

Selon un mode préféré de réalisation, un capteur comprend au moins un matériau conforme à l'invention déposé sur un substrat adapté, préférentiellement sous la forme d'un film mince sur un substrat transparent. Le substrat peut être choisi parmi ceux utilisés habituellement dans le domaine de l'analyse spectrophotométrique, dont notamment des lames ou des plaques de verre, de quartz de mica ou de fluorine. Typiquement, le dépôt est réalisé selon des techniques bien connues de l'homme du métier dont, notamment, le trempage, le dépôt à la tournette, par spray (liquide ou gaz). Avantageusement, le dépôt du matériau conforme à l'invention est réalisé par trempage. L'homme du métier adaptera la vitesse de retrait du substrat de dépôt au matériau qui est déposé, de préférence une vitesse proche de 25 mm.min⁻¹. Le trempage peut se faire à température ambiante (22-25°C) avec une humidité relative de l'air comprise entre 15 et 50%.

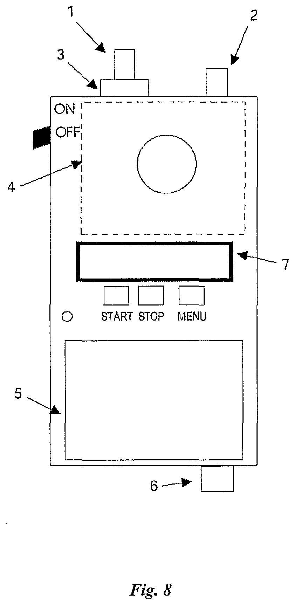

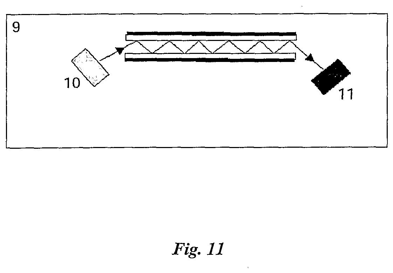

Selon un autre mode préféré de réalisation, les dispositifs ou capteurs (Figs. 8 à 11) conformes à l'invention intègrent au moins une source d'excitation lumineuse (10) et un collecteur (11). Ils sont composés d'un premier compartiment (4) et d'un second compartiment (5) et d'un écran (7). Le gaz est introduit dans le capteur par une entrée spécifique (1) puis traverse un thermostat qui permet de contrôler la température ainsi qu'un filtre à particule (3). Un système de pompe à refoulement (8) permet d'accélérer la diffusion du gaz jusqu'au matériau conforme à l'invention (9). Alternativement la pompe peut être placée près de la sortie de gaz (2) plutôt que près de l'entrée, dans ce cas on utilisera avantageusement une micropompe. Il convient de préciser que le matériau conforme à l'invention (9) est protégé de l'extérieur par une enveloppe protectrice (13) de façon étanche par une joint torique (12). S'il s'agit d'un aldéhyde, celui réagira sur la molécule sonde. La réaction de l'aldéhyde avec la molécule sonde sera détectée après excitation lumineuse (10) par un collecteur (11) et lue sur l'écran (7). Avantageusement, la source lumineuse sera constituée d'une lampe halogène ou d'une diode électroluminescente et le collecteur d'une barrette de diodes ou d'un photomultiplicateur basse tension. Lorsque la méthode de détection est basée sur une variation d'absorbance du film dopé, il est préférable d'utiliser un système composé de deux films minces dopés déposés chacun sur un substrat réfléchissant afin optimiser l'absorption de la source lumineuse par le matériau. Les photons en rebondissant de multiples fois sur les parois recouvertes de films seront fortement absorbés par le matériau (figure 11). Une sortie de gaz (2) est prévue dans le cadre de ce capteur. Les dispositifs ou capteurs miniaturisés sont préférés. Il est souhaitable que le dispositif ou capteur comprenne en outre un support pour les matériaux selon l'invention, plus particulièrement un support accueillant le substrat choisi en fonction de la méthode de détection. Avantageusement, le dispositif ou capteur comprendra également un système pour accélérer la diffusion du milieu à analyser, particulièrement un milieu gazeux. Préférentiellement, le système pour accélérer la diffusion du gaz est un système pneumatique comme un piston, une pompe à refoulement ou une micropompe. Un tel système sera particulièrement utile dans le cas d'un dispositif de dépollution. Les capteurs d'aldéhydes à transduction optique directe sont ainsi spécialement concernés par l'invention.

Selon un mode particulier de réalisation il est possible d'utiliser un substrat spécifique qui permet de générer des plasmons de surface. Un dispositif permettant de mettre à profit des plasmons de surface contiendra par exemple une plaque choisie parmi les substrats utilisés habituellement dans le domaine de l'analyse spectrophotométrique, dont notamment des lames ou des plaques de verre, de quartz, de mica ou de fluorine, ladite plaque étant recouverte d'une couche de métal sur laquelle est déposé le matériau selon l'invention.

Parmi les métaux utilisables on peut citer l'or, l'argent ou de préférence l'aluminium. Le choix du métal est de généralement lié à celui de la molécule sonde, ainsi par exemple pour des molécules sondes absorbant en UV il est préférable d'employer de l'aluminium qui présente une émission en UV liées aux plasmons [J. Phys. Chem. B, 2004, 108, 19114-19118]. L'épaisseur de la couche de métal peut être comprise entre 10 et 90 nm, de préférence aux alentours de 60 nm. Il est avantageux de déposer une couche de matériaux exempts de molécule sonde entre la couche de métal et la couche de matériau afin d'éviter qu'une molécule sonde ne soit en contact direct avec la surface métallisée. Typiquement, la couche de matériaux aura une épaisseur comprise entre 5 et 40 nm, de préférence environ 25 nm, et la couche de matériau exempt de molécule sonde une épaisseur comprise en 5 et 20 nm, de préférence 10 nm. La longueur d'onde d'irradiation dépendra de la nature du métal et de la molécule sonde fluorescente. Typiquement, on utilisera des sources UV (260-300 nm pour des films d'Al et 350-400 nm pour des films d'Ag) pour générer les plasmons.

Selon un autre mode particulier de réalisation, les variations de la masse, de la viscoélasticité ou de la constante diélectrique du matériau sont étudiées à l'aide d'ondes de type Love, notamment par la variation de leur vitesse de phase ou de leur vitesse de propagation.

Il est recommandé d'employer un substrat piézoélectrique, sur lequel seront déposées des électrodes avec des structures en peigne interdigitées (ou transducteurs). Ces électrodes peuvent être disposées aux deux extrémités de la surface du substrat et le matériau nanoporeux est disposé sur l'espace libre entre les deux électrodes, selon une configuration de « ligne à retard ». Des ondes de type Love peuvent alors être générées par les transducteurs et la variation de leur vitesse de propagation peut par exemple être suivie par les transducteurs.

Typiquement le substrat piézoélectrique équipé de transducteurs pourra être recouvert par une couche guide, par exemple en SiO₂, et le matériau nanoporeux déposé à la surface de celle-ci.

Le matériau conforme à l'invention présente de nombreux avantages qui lui permettent d'être utilisé en métrologie des aldéhydes gazeux, et plus particulièrement du formaldéhyde gazeux, ainsi qu'en dépollution. Du fait de son procédé de préparation, le matériau conforme à l'invention est nanoporeux et offre donc une surface spécifique d'adsorption très importante. Cette caractéristique structurelle est d'autant plus importante dans le cadre du dispositif de dépollution. Par ailleurs, la taille des pores et la nature du matériau conforme à l'invention peuvent facilement être adaptées pour sélectivement détecter et/ou doser certains aldéhydes, dont notamment le formaldéhyde. Le matériau conforme à l'invention peut être mis en œuvre dans des méthodes de détection et/ou de dosage et/ou de piégeage des aldéhydes gazeux quelles que soient les conditions dont notamment le taux d'humidité ambiante. L'invention ne nécessite pas la présence d'acide ni de travailler à un pH particulier. Par exemple l'invention peut être mise en œuvre entre pH 4 et 10, notamment entre pH 4 et 7.

Enfin, le matériau conforme à l'invention peut aisément être intégré à un capteur ou un dispositif qui permet la détection in situ, directe et simple d'aldéhydes gazeux. De façon avantageuse, des capteurs peuvent être utilisés en réseau et assurer de façon permanente le contrôle qualité d'un environnement à fort risque de contamination par des aldéhydes. Les dispositifs ou capteurs peuvent également être associés à une alarme visuelle ou sonore qui se déclenche lorsque la teneur en aldéhyde dans l'environnement à tester atteint un certain seuil critique.

L'invention sera comprise de manière plus précise à travers les figures annexées et exemples de réalisation qui suivent.

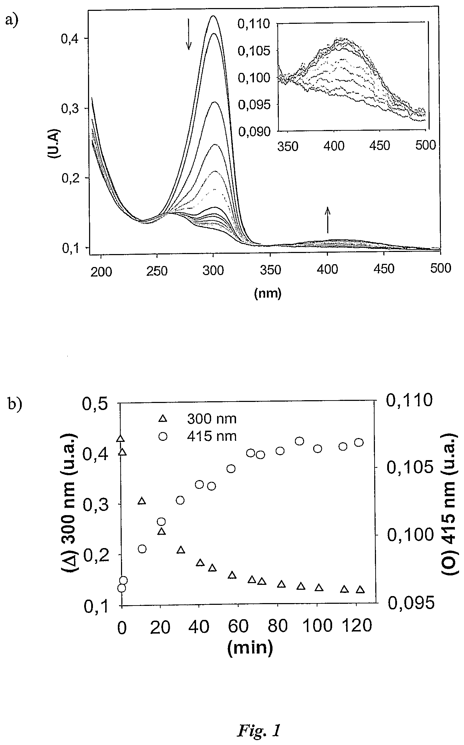

La figure 1 (a) représente un spectre d'absorbance (en unité arbitraire u.a.) en fonction de la longueur d'onde (nm) observé au cours du temps lors de l'exposition d'un film poreux contenant du Fluoral-P à un flux d'azote contenant 8 ppb de formaldéhyde avec une humidité relative du mélange gazeux de 58%. La figure 1 (b) représente une courbe illustrant la variation d'absorbance du Fluoral-P (à 300 nm) et de la DDL (à 415 nm) en fonction du temps d'exposition (en min).

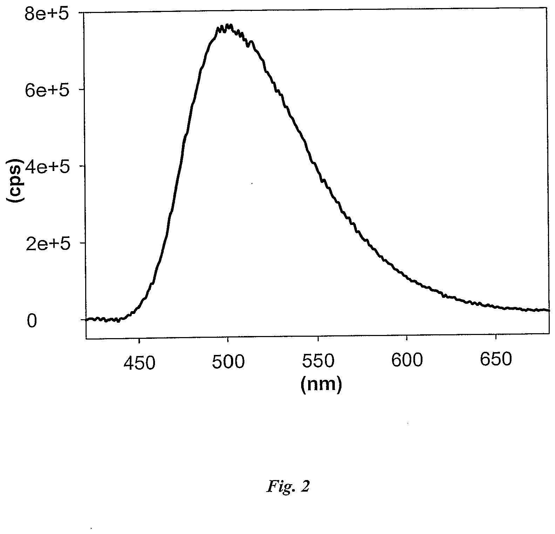

La figure 2 représente un spectre de fluorescence en fonction de la longueur d'onde (nm) de la 3,5-diacétyl-2,6-dihydrolutidine (produit de la réaction du Fluoral-P avec le formaldéhyde) mesuré en fin d'expérience lorsque l'absorbance à 415 nm atteint un plateau. L'intensité de fluorescence est mesurée en nombre de coups par seconde (cps).

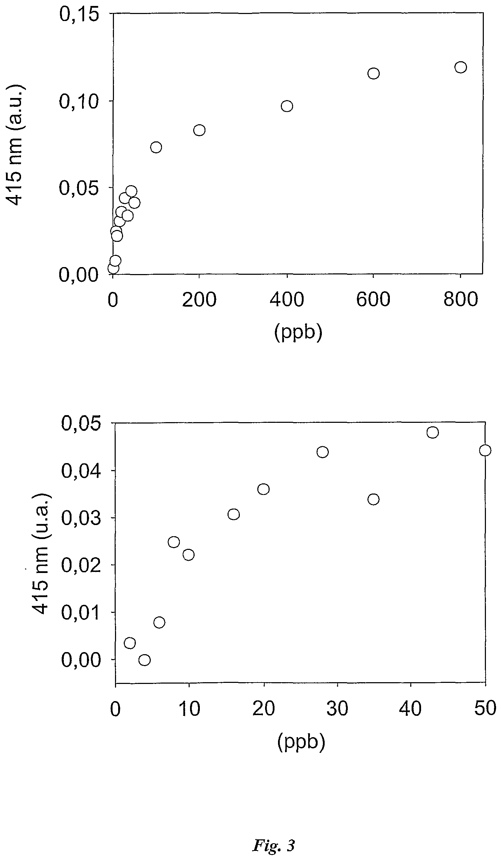

La figure 3 représente une courbe illustrant la variation de l'absorbance (u.a.) à 415 nm en fonction de la concentration (en partie par milliards ppb) de la 3,5-diacétyl-2,6-dihydrolutidine mesurée après consommation totale du Fluoral-P, la vitesse du flux gazeux est de 200 mL.min⁻¹ et l'humidité relative de 58%.

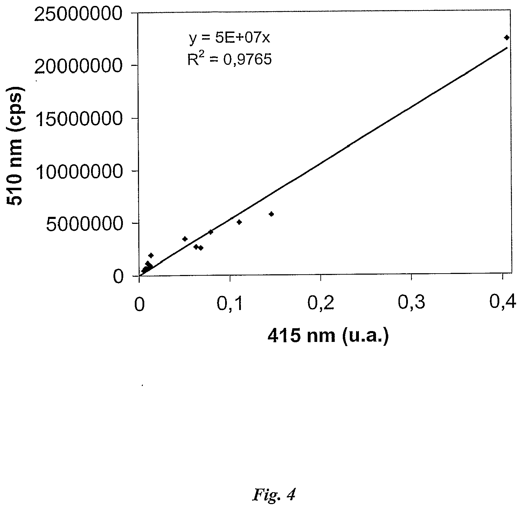

La figure 4 représente la variation de l'intensité de fluorescence (cps) de la 3,5-diacétyl-2,6-dihydrolutidine à 510 nm en fonction de son absorbance (u.a.) à 415 nm ; les valeurs ont été obtenues à partir de l'exposition sous flux de divers films contenant du Fluoral-P pour diverses teneurs de formaldéhyde dans l'azote avec une humidité relative maintenue à 58% et un flux de gaz de 200 mL.min⁻¹ pour toutes les expériences.

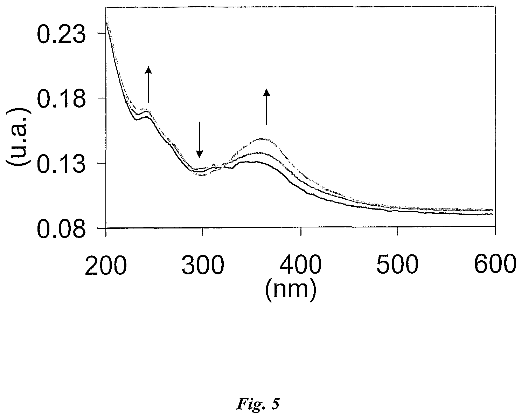

La figure 5 représente la variation de l'absorbance (u.a.) en fonction de la longueur d'onde (nm) lors de l'exposition d'un film mince poreux contenant de la 2,4-dinitrophénylhydrazine à un mélange d'azote contenant 800 ppb de formaldéhyde, l'humidité relative est maintenue à 58% et le flux de gaz est de 200 mL.min⁻¹ ; les différentes courbes correspondent à t = 0, 1 et 61 min

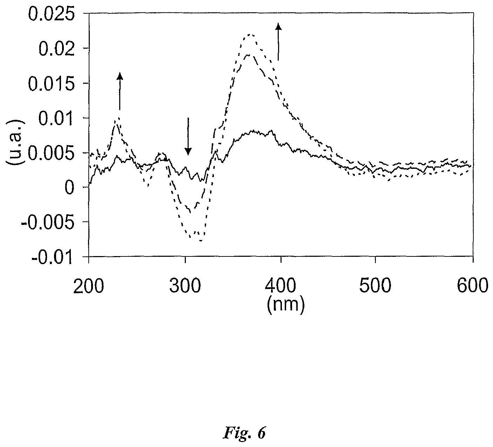

La figure 6 représente la variation de l'absorbance différentielle (u.a.) en fonction de la longueur d'onde (nm) lors de l'exposition d'un film mince poreux contenant de la 2,4-dinitrophénylhydrazine à un mélange d'azote contenant 800 ppb de formaldéhyde, l'humidité relative est maintenue à 58% et le flux de gaz est de 200 mL.min⁻¹.

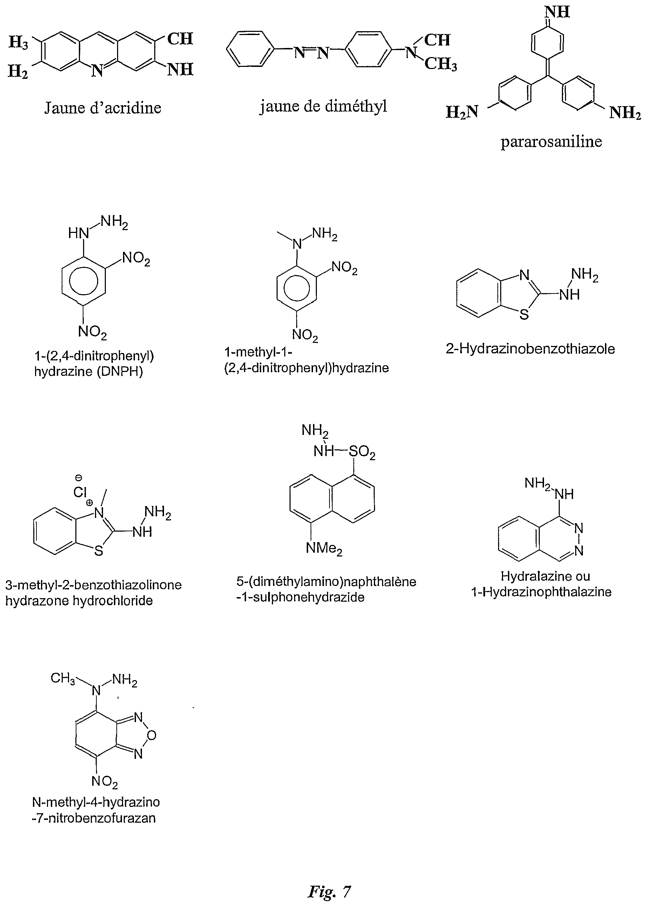

La figure 7 correspond à une liste de molécules sonde pouvant être utilisées dans le cadre de l'invention
La figure 8 correspond au schéma d'un capteur conforme à l'invention.

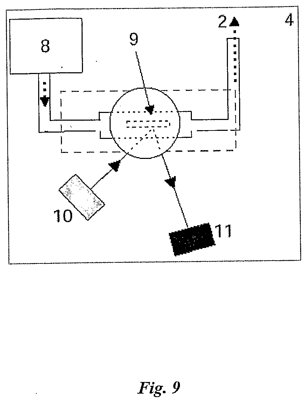

La figure 9 représente une vue de dessus du compartiment (4) d'un capteur conforme à l'invention.

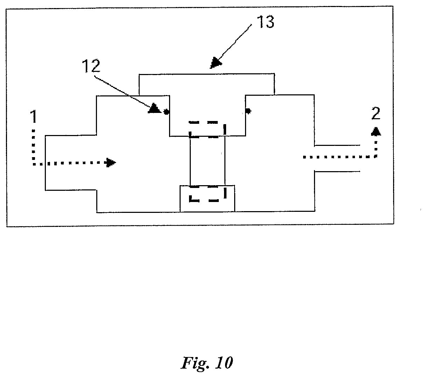

La figure 10 correspond à une coupe transversale du compartiment (4) comprenant un matériau conforme à l'invention.
La figure 11 représente un système de détection intégré dans un capteur comportant deux films composés du matériau.

### EXEMPLES

Les mesures spectrophotométriques ont été réalisées sur un spectrophotomètre UNICAM 500 et un spectrofluoromètre SPEX-FLUOROLOG 3.

### EXEMPLE 1 : PREPARATION D'UN MATERIAU COMPRENANT UNE MATRICE NANOPOREUSE SOL-GEL

Le Fluoral-P peut-être synthétisé selon la méthode mise au point par Lacey. [Lacey, Aust. J. Chem., 23 (1970) 841-842]. Pour l'ensemble des expériences d'exposition au formaldéhyde, la vitesse du flux gazeux est maintenue égale à 200 mL.min⁻¹ lorsque cela n'est pas spécifié.

L'incorporation du Fluoral-P dans les matrices poreuses à base d'oxyde métallique est réalisée selon la méthode « one-pot » du procédé sol-gel. Une matrice conforme à l'invention est élaborée à partir du tétraméthoxysilane (TMOS) dans une solution Ethanol/eau. Les proportions molaires TMOS/Ethanol/eau sont égales à 1/4/4. Une solution éthanolique de Fluoral-P 0,5 mol.L⁻¹ à laquelle sont rajoutés le TMOS et une solution aqueuse d'acide (HCl tel que pH=1). Après ajout du Fluoral-P, la solution obtenue est homogénéisée par ultrasons pendant 10 minutes.

### EXEMPLE 2 : DEPOT DU MATERIAU SUR UN SUPPORT APPROPRIE

Un film mince homogène du matériau préparé à l'Exemple 1 est ensuite déposé sur un substrat en quartz (0,8 x 0,1 x 15 mm) par la méthode de trempage (dip-coating) avec une vitesse de retrait du film d'environ 25 mm.min⁻¹. Le dépôt est effectué à température ambiante (22-25°C) avec une humidité relative de 15 à 50%.

Le dépôt (30 nm) peut également être réalisée de manière similaire sur un substrat en quartz préalablement recouvert d'une couche d'argent ou d'aluminium (60 nm) et d'une couche de matrice conforme à l'invention est élaborée à partir du tétraméthoxysilane (TMOS) (10 nm) afin de mener une étude à l'aide de plasmons.

Il est possible de réaliser un dépôt du matériau nanoporeux sur un substrat piézoélectrique, sur lequel sont déposées aux deux extrémités des électrodes en structure de peignes interdigitée servant de transducteurs, et préalablement recouvert d'une couche guide de SiO₂, afin de mener une étude à l'aide des ondes de Love.

### EXEMPLE 3 : UTILISATION DU MATERIAU POUR LA DETECTION SELECTIVE DU FORMALDEHYDE

L'échantillon est ensuite placé dans une cuve à écoulement (10 x 10 x 40 mm) à quatre faces optiques munie d'une entrée et d'une sortie tubulaire de 4 mm de diamètre. Les mélanges gazeux sont générés à partir d'un four à perméation contenant un tube à perméation rempli de paraformaldéhyde (trimère solide du formaldéhyde) qui est chauffé à 90°C pour libérer les vapeurs de formaldéhyde qui sont entraînées par de l'azote. La teneur initiale de formaldéhyde sous un flux de 125 ml.min⁻¹ est de 4 ppm. La concentration et le flux du mélange final sont contrôlés et réglés par un système de dilution. De la même manière, l'humidité relative du mélange peut être variée par injection de vapeur d'eau régulée à l'aide d'un débitmètre.

La réaction de deux molécules de Fluoral-P avec le formaldéhyde forme la DDL. Des mesures d'absorption (figure 1) et de fluorimétrie (figure 2) sont effectuées sur l'échantillon ainsi préparé. Le Fluoral-P présente un spectre d'absorption (λₘₐₓ = 302 nm) distinct de celui de la DDL (λ_{max 1} = 206 nm et λ_{max 2} = 415 nm), la détection peut être dans ce cas avantageusement réalisée en mesurant la variation d'absorbance à 415 nm, où seule absorbe la DDL. Par ailleurs, la DDL ayant des propriétés de fluorescence, sa détection, et *i.e.* le dosage du formaldéhyde, peut être réalisée en éclairant le film, notamment à 415 nm, de manière à exciter la DDL et en collectant l'intensité de fluorescence à une longueur d'onde donnée (λₘₐₓ de fluorescence à 502 nm) ou la fluorescence totale (intégrée sur tout le spectre) en fonction du temps. Le spectre de fluorescence de la figure 2 correspond à la fin de l'exposition lorsque tout le Fluoral-P a réagi.

Il apparaît que le rendement de piégeage du formaldéhyde dans la matrice poreuse et sa réactivité avec le Fluoral-P varient en fonction de sa concentration dans le mélange gazeux. De la figure 3 on peut constater les variations de l'absorbance en fonction de la concentration de formaldéhyde dans le milieu ; chaque point représente une expérience réalisée à une teneur donnée en formaldéhyde.

Il est vérifié que l'intensité de fluorescence de la 3,5-diacétyl-2,6-dihydrolutidine, mesurée à 510 nm, est proportionnelle à son absorbance à la longueur d'onde d'excitation, 415 nm, comme en solution (figure 4), ce qui montre bien que seule la DDL absorbe à 415 nm et fluoresce à 510 nm.

Il apparaît que l'utilisation des matériaux conforme à l'invention permet, par fluorimétrie, de détecter 2 ppb de formaldéhyde en 100 minutes. Il s'agit du plateau atteint. La détection est visible dès les premières mesures avec un flux de 200 mL.min⁻¹ d'un mélange d'azote contenant 2 ppb de formaldéhyde, soit pour un volume total d'azote de 20 litres. Lorsque la teneur de formaldéhyde est de 50 ppb, il suffit de 5 minutes pour un volume total de 1 litre.

Le temps de réponse de l'analyse est ici limité par le dispositif expérimental de dilution qui ne permet pas de dépasser une vitesse de flux de 200 mL.min⁻¹. Une augmentation de la vitesse du flux à 1 ou 2 L.min⁻¹ devrait réduire ce temps d'un facteur 5 à 10.

Par ailleurs, la sensibilité peut être fortement augmentée dans les mesures fluorimétriques, notamment en excitant la 3,5-diacétyl-2,6-dihydrolutidine dans la totalité de sa bande d'absorption entre 360 et 470 nm et en collectant la fluorescence intégrée sur tout le spectre de fluorescence. L'utilisation de filtres optiques interférentiels pour délimiter le domaine de longueur d'onde d'excitation et de collecte de l'émission permettrait de s'affranchir de l'utilisation d'un spectrophotomètre et donc de réduire le coût de l'appareillage de détection.

Des expériences similaires ont été menées en utilisant l'air ambiant du laboratoire comme gaz vecteur. Les polluants présents, et notamment les traces de solvants organiques comme l'éthanol (environ 500 ppb) ou l'acétone (environ 500 ppb) et de polluants comme le NO₂, n'ont pas eu d'incidence sur les mesures.

L'utilisation de plasmons de surface conduit à un spectre pour lequel il est possible d'observer une multiplication des pics ou une exaltation de l'intensité. Ainsi l'excitation à 295 nm d'un film d'Al de 20 nm sur lequel est déposé une couche de SiO₂ de 10 nm, génère des plasmons vers 300-450 nm. Pur un film d'Ag de 60 nm, sur lequel est déposé un film d'Al₂O₃ de 20 nm, qui est excité entre 350-400 nm des plasmons sont générés vers 450-650 nm.

Il a par ailleurs été constaté que la variation de la vitesse de propagation des ondes de Love, générée à l'aide du substrat piézoélectrique, est fonction de la quantité d'aldéhyde qui a réagi avec le matériau.

Considérant l'efficacité de la réaction, un tel dispositif apparaît comme utilisable pour dépolluer une atmosphère contaminée par du formaldéhyde.

### EXEMPLE 4 (exemple de référence): PREPARATION D'UN MATERIAU CONTENANT DE LA 2,4-DINITROPHENYLHYDRAZINE

L'incorporation de 2,4-dinitrophénylhydrazine (fournisseur FLUKA) dans les films poreux à base de polymères inorganiques est réalisée selon la méthode « one-pot » du procédé sol-gel. Deux solutions mères éthanolique et aqueuse acide (pH=1) saturées en 2,4-dinitrophénylhydrazine sont tout d'abord préparées. Le sol est constitué du mélange tétraméthoxysilane (TMOS)/solution mère d'éthanol/solution mère aqueuse acide dans des proportions molaires égales à 1/4/4.

### EXEMPLE 5 (exemple de référence): DEPOT DU MATERIAU SUR UN SUPPORT PAR METHODE DE TREMPAGE

Un film mince homogène du matériau préparé à l'exemple 4 est ensuite déposé sur un substrat en quartz (0,8 x 0,1 x 15 mm) par la méthode de trempage (dip-coating) avec une vitesse de retrait du film d'environ 25 mm.min⁻¹. Le dépôt est effectué à température ambiante (22-25°C) avec une humidité relative de 15 à 50%.

### EXEMPLE 6 (exemple de référence) : UTILISATION DU MATERIAU POUR LA DETECTION NON SELECTIVE DU FORMALDEHYDE ET ACETALDEHYDE

Des mesures sont effectuées dans des conditions similaires à celles du Fluoral-P telles qu'elles ont été décrites à l'Exemple 3. Les aldéhydes testés sont le formaldéhyde et l'acétaldéhyde. Les courbes représentées sur les figures 5 et 6 montrent l'évolution de l'absorbance au cours de la réaction de la DNPH avec le formaldéhyde. On constate que la DNPH disparaît rapidement pour former une hydrazone dont le spectre est proche de celui de l'hydrazine. Il est nécessaire de déterminer l'absorbance différentielle (figure 6) pour mettre en évidence l'efficacité de la réaction.

La 2,4-dinitrophénylhydrazine (DNPH) réagit avec la plupart des aldéhydes en formant le dérivé d'hydrazone correspondant. Le matériau contenant la DNPH est non sélectif et pourra donc être utilisé pour une mesure de la totalité des aldéhydes présents dans l'air. Etant donné la possibilité de faire varier la taille des pores du matériau nanoporeux, il est possible de discriminer les aldéhydes par leur taille afin de détecter uniquement les aldéhydes de petite taille (formaldéhyde et acétaldéhyde). Notons que les cétones de petite taille (acétone) peuvent interférer dans cette mesure.

## Revendications

1. Procédé de détection et/ou de dosage et/ou de piégeage d'au moins un aldéhyde, **caractérisé en ce qu'**il comprend une étape de mise en contact d'un flux gazeux avec un matériau comprenant une matrice nanoporeuse sol-gel d'oxydes métalliques solide et transparente, ladite matrice contenant au moins une molécule sonde portant au moins une fonction réactive pouvant réagir avec une fonction aldéhyde, ladite fonction réactive étant choisie parmi les énaminones et les couples β-dicétone/amine correspondants ou les sels dérivés de ces composés.

2. Procédé selon la revendication 1, **caractérisé en ce que** l'aldéhyde est choisi parmi le formaldéhyde, l'acétaldéhyde, le propionaldéhyde, le butyraldéhyde, l'acroléine, le pentanal, l'hexanal et le benzaldéhyde, préférentiellement le formaldéhyde.

3. Procédé selon l'une quelconque des revendications précédentes, **caractérisé en ce qu'**il comprend en outre une étape d'analyse de la variation des propriétés spectrales d'au moins une molécule sonde par au moins une technique de spectrophotométrie.

4. Procédé selon la revendication 1, **caractérisé en ce que** les énaminones répondent à la formule (I) : 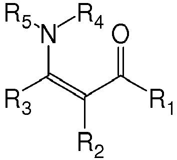 dans laquelle
R₁ correspond à un hydrogène, un radical alkyle ou aryle,
R₂ correspond à un hydrogène,
R₃ correspond à un hydrogène, un radical alkyle ou aryle,
R₄ correspond à un hydrogène, un radical alkyle ou aryle,
R₅ correspond à un hydrogène.

5. Procédé selon la revendication 1, **caractérisé en ce que** le couple β-dicétone/amine répond à la formule (II) : 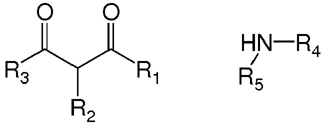 dans laquelle,
R₁ correspond à un hydrogène, radical alkyle ou aryle,
R₂ correspond à un hydrogène,
R₃ correspond à un hydrogène, un radical alkyle ou aryle,
R₄ correspond à un hydrogène, un radical alkyle,
R₅ correspond à un hydrogène,
ou un sel correspondant.

6. Procédé selon la revendication 4 ou 5, dans lequel R₁ et R₃ sont indépendamment un radical méthyle, éthyle, isopropyle, butyle, isobutyle, tert-butyle, pentyle ou phényle et R₄ un hydrogène.

7. Procédé selon la revendication 6, dans lequel R₁ est un radical méthyle et R₃ un radical méthyle ou phényle.

8. Procédé selon l'une quelconque des revendications précédentes, **caractérisé en ce que** la matrice nanoporeuse sol-gel d'oxydes métalliques est élaborée à partir d'au moins un oxyde métallique de formule (IV) :
M(X)ₘ(OR₈)ₙ(R₉)ₚ
dans laquelle :
M correspond à un métal choisi parmi le silicium, l'aluminium, le titane,
le zirconium, le niobium, le vanadium, l'yttrium et le cérium,
R₈ et R₉ correspondent indépendamment à un radical alkyle ou aryle,
n, m et p sont des entiers, tels que leur somme soit égale à la valence de
M et que n soit supérieur ou égal à 2,
X est un halogène.

9. Procédé selon la revendication 8, **caractérisé en ce que** M est du silicium ou du zirconium.

10. Procédé selon la revendication 8 ou 9, **caractérisé en ce que** R₈ et R₉ sont indépendamment des radicaux méthyles ou éthyles.

11. Procédé selon l'une quelconque des revendications 8 à 10, **caractérisé en ce que** X est le chlore.

12. Procédé selon la revendication 10, **caractérisé en ce que** l'oxyde métallique est Si(OMe)₄.

13. Matériau apte à réagir avec au moins un aldéhyde gazeux, préférentiellement le formaldéhyde, **caractérisé en ce qu'**il comprend une matrice nanoporeuse sol-gel d'oxydes métalliques solide et transparente telle que définie à l'une quelconque des revendications 8 à 12, ladite matrice contenant au moins une molécule sonde telle que définie à l'une quelconque des revendications 1 à 7 portant au moins une fonction réactive avec une fonction aldéhyde, ladite fonction réactive étant choisie parmi les énaminones et les couples β-dicétone/amine correspondants ou les sels dérivés de ces composés.

14. Matériau selon la revendication 13, **caractérisé en ce que** les radicaux R₈ et R₉ de l'oxyde métallique sont indépendamment des radicaux méthyles ou éthyles et que la molécule sonde est une énaminone.

15. Matériau selon la revendication 14, **caractérisé en ce que** l'oxyde métallique est Si(OMe)₄ et la molécule sonde est le Fluoral-P.

16. Procédé de préparation d'un matériau apte à réagir avec au moins un aldéhyde, **caractérisé en ce qu'**il comprend :
(a) une étape d'élaboration d'une matrice nanoporeuse sol-gel par polymérisation d'au moins un oxyde métallique tel que défini à l'une quelconque des revendications 8 à 12,
(b) une étape d'incorporation dans ladite matrice nanoporeuse sol-gel ou dans ledit au moins un oxyde métallique d'au moins une molécule sonde telle que définie à l'une quelconque des revendications 1 à 7.

17. Procédé selon la revendication 16, **caractérisé en ce que** l'étape d'élaboration de la matrice nanoporeuse sol-gel (a) comporte une étape d'hydrolyse d'au moins un oxyde métallique, ladite étape d'hydrolyse étant de préférence réalisée en présence d'un solvant organique, dont notamment le méthanol ou l'éthanol.

18. Procédé selon la revendication 17, **caractérisé en ce que** l'étape d'hydrolyse est réalisée à un pH inférieur à 7.

19. Procédé selon l'une quelconque des revendications 16 à 18, **caractérisé en ce que** les étapes (a) et (b) sont réalisées simultanément.

20. Procédé selon l'une quelconque des revendications 16 à 19, **caractérisé en ce qu'**il comprend en outre une étape d'homogénéisation et/ou de séchage.

21. Capteur ou dispositif spécifique d'aldéhydes, préférentiellement de formaldéhyde, **caractérisé en ce qu'**il comprend au moins un matériau tel que défini à l'une quelconque des revendications 13 à 15, ou obtenu selon le procédé tel que défini à l'une quelconque des revendications 16 à 20, ou mettant en oeuvre le procédé de détection et/ou de dosage et/ou de piégeage tel que défini à l'une quelconque des revendications 1 à 12.

22. Capteur ou dispositif selon la revendication 21, **caractérisé en ce que** le matériau est déposé sur un substrat adapté, préférentiellement sous la forme d'un film mince sur un substrat transparent.

23. Capteur ou dispositif selon l'une quelconque des revendications 21 ou 22, **caractérisé en ce qu'**il intègre au moins une source d'excitation lumineuse et un collecteur.

## Patentansprüche

1. Verfahren zur Detektion und/oder Dosierung und/oder Einfangen von wenigstens einem Aldehyd, **dadurch gekennzeichnet, dass** es einen Schritt der Herstellung eines Kontakts zwischen einem Gasfluss und einem Material umfasst, das eine feste und transparente nanoporöse Sol-Gel Metalloxid-Matrix umfasst, wobei die Matrix wenigstens ein Sondenmolekül enthält, das wenigstens eine reaktive Funktion umfasst, die mit einer Aldehydfunktion reagieren kann, wobei die reaktive Funktion gewählt ist aus Enaminonen und korrespondierenden ß-Diketon/Amin-Paaren oder den von diesen Komponenten abgeleiteten Salzen.

2. Verfahren nach Anspruch **1**, **dadurch gekennzeichnet, dass** der Aldehyd ausgewählt ist aus Formaldehyd, Acetaldehyd, Propionaldehyd, Butyraldehyd, Akrolein, Pentanal, Hexanal und Benzaldehyd, bevorzugt Formaldehyd.

3. Verfahren nach einem der vorhergehenden Ansprüche, **dadurch gekennzeichnet, dass** es ferner einen Schritt der Analyse der Variation der Spektraleigenschaften wenigstens eines Sondenmoleküls mittels wenigstens einer Spektrophotometrie-Methode umfasst.

4. Verfahren nach Anspruch **1**, **dadurch gekennzeichnet, dass** die Enaminone folgende Formel (I) haben: 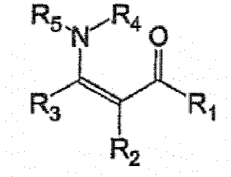 wobei gilt:
R₁ steht für Wasserstoff, einen Alkyl- oder Arylrest
R₂ steht für Wasserstoff,
R₃ steht für Wasserstoff, einen Alkyl- oder Arylrest,
R₄ steht für Wasserstoff, einen Alkyl- oder Arylrest,
R₅ steht für Wasserstoff.

5. Verfahren nach Anspruch **1**, **dadurch gekennzeichnet, dass** das ß-Diketon/Amin-Paar folgende Formel (II) hat: 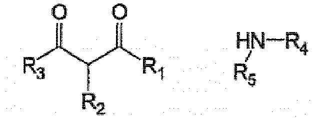 wobei gilt:
R₁ steht für Wasserstoff, einen Alkyl- oder Arylrest
R₂ steht für Wasserstoff,
R₃ steht für Wasserstoff, einen Alkyl- oder Arylrest,
R₄ steht für Wasserstoff oder einen Alkylrest,
R₅ steht für Wasserstoff,
oder ein zugehöriges Salz.

6. Verfahren nach Anspruch **4** oder **5**, wobei R₁ und R₃ unabhängig voneinander ein Methyl-, Ethyl-, lsopropyl-, Butyl,-, lsobutyl-, tert-Butyl-, Pentyl- oder Phenylrest sind und R₄ Wasserstoff ist.

7. Verfahren nach Anspruch **6**, bei welchem R₁ ein Methylrest und R₃ ein Methyl- oder Phenylrest ist.

8. Verfahren nach einem der vorhergehenden Ansprüche, **dadurch gekennzeichnet, dass** die nanoporöse Sol-Gel Metalloxid-Matrix basierend auf wenigstens einem Metalloxid mit der Formel (IV) aufgebaut ist:
M(X)ₘ(OR₈)ₙ(R₉)ₚ
wobei gilt:
M steht für ein Metall, welches gewählt ist aus Silicium, Aluminium, Titan, Zirconium, Niobium, Vanadium, Yttrium und Cerium,
R₈ und R₉ stehen unabhängig voneinander für einen Alkyl- oder Arylrest,
n, m und p sind ganze Zahlen, sodass ihre Summe gleich der Valenz von M ist und
n größer gleich 2 ist,
X ist ein Halogen.

9. Verfahren nach Anspruch **8**, **dadurch gekennzeichnet, dass** M Silicium oder Zirconium ist.

10. Verfahren nach Anspruch **8** oder **9**, **dadurch gekennzeichnet, dass** R₈ und R₉ unabhängig voneinander Methyl- oder Ethylreste sind.

11. Verfahren nach einem der Ansprüche **8** bis **10**, **dadurch gekennzeichnet, dass** X Chlor ist.

12. Verfahren nach Anspruch **10**, **dadurch gekennzeichnet, dass** das Metalloxid Si(OMe)₄ ist.

13. Material, das mit wenigstens einem gasförmigen Aldehyd reagieren kann, bevorzugt Formaldehyd, **dadurch gekennzeichnet, dass** es eine feste und transparente nanoporöse Sol-Gel Metalloxid-Matrix nach einem der Ansprüche **8** bis **12** umfasst, wobei die Matrix wenigstens ein Sondenmolekül nach einem der Ansprüche **1** bis **7** umfasst, das wenigstens eine reaktive Funktion mit einer Aldehydfunktion umfasst, wobei die reaktive Funktion aus Enaminonen und korrespondierenden β-Diketon/Amin-Paaren oder den von diesen Komponenten abgeleiteten Salzen gewählt ist.

14. Material nach Anspruch **13**, **dadurch gekennzeichnet, dass** die Reste R₈ und R₉ des Metalloxids unabhängig voneinander Methyl- oder Ethylreste sind und dass das Sondenmolekül ein Enaminon ist.

15. Material nach Anspruch **14**, **dadurch gekennzeichnet, dass** das Metalloxid Si(OMe)₄ ist und das Sondenmolekül Fluoral-P ist.

16. Verfahren zur Herstellung eines Materials, das mit wenigstens einem Aldehyd reagieren kann, **dadurch gekennzeichnet, dass** es umfasst:
(a) einen Schritt des Aufbaus einer nanoporösen Sol-Gel Matrix durch Polymerisierung wenigstens eines Metalloxids nach einem der Ansprüche **8** bis **12**,
(b) einen Schritt der Integration wenigstens eines Sondenmoleküls nach einem der Ansprüche **1** bis **7** in die nanoporöse Sol-Gel Matrix oder in das wenigstens eine Metalloxid.

17. Verfahren nach Anspruch **16**, **dadurch gekennzeichnet, dass** der Schritt des Aufbaus der nanoporösen Sol-Gel Matrix (a) einen Schritt der Hydrolyse wenigstens eines Metalloxids umfasst, wobei der Hydrolyseschritt bevorzugt in Anwesenheit eines organischen Lösungsmittels, insbesondere Methanol oder Ethanol, durchgeführt wird.

18. Verfahren nach Anspruch **17**, **dadurch gekennzeichnet, dass** der Hydrolyseschritt bei einem pH-Wert kleiner 7 durchgeführt wird.

19. Verfahren nach einem der Ansprüche **16** bis **18**, **dadurch gekennzeichnet, dass** die Schritte (a) und (b) gleichzeitig durchgeführt werden.

20. Verfahren nach einem der Ansprüche **16** bis **19**, **dadurch gekennzeichnet, dass** es ferner einen Schritt der Homogenisierung und/oder der Trocknung umfasst.

21. Sonde oder spezifische Aldehyd-, bevorzugt Formaldehydvorrichtung, **dadurch gekennzeichnet, dass** sie wenigstens ein Material nach einem der Ansprüche **13** bis **15** umfasst, oder nach dem Verfahren nach einem der Ansprüche **16** bis **20** gewonnen wird oder das Verfahren zur Detektion und/oder Dosierung und/oder Einfangen nach einem der Ansprüche **1** bis **12** anwendet.

22. Sonde oder Vorrichtung nach Anspruch **21**, **dadurch gekennzeichnet, dass** das Material auf ein angepasstes Substrat aufgebracht wird, bevorzugt in Form eines dünnen Films auf einem transparenten Substrat.

23. Sonde oder Vorrichtung nach einem der Ansprüche **21** oder **22**, **dadurch gekennzeichnet, dass** es wenigstens eine Quelle der Lichtanregung und einen Kollektor umfasst.

## Claims

1. A method for detecting and/or assaying and/or trapping at least one aldehyde, **characterized in that** it comprises a step of bringing a gas stream into contact with a material comprising a solid and transparent nanoporous metal oxide sol-gel matrix, said matrix containing at least one probe molecule bearing at least one reactive functional group which can react with an aldehyde functional group, said reactive functional group being chosen from enaminones and the corresponding β-diketone/amine pairs or salts derived from these compounds.

2. The method as claimed in claim **1**, **characterized in that** the aldehyde is chosen from formaldehyde, acetaldehyde, propionaldehyde, butyraldehyde, acrolein, pentanal, hexanal and benzaldehyde, preferably formaldehyde.

3. The method as claimed in either one of the preceding claims, **characterized in that** it additionally comprises a step of analyzing the variation of the spectral properties of at least one probe molecule by at least one spectrophotometry technique.

4. The method as claimed in claim **1**, **characterized in that** the enaminones correspond to the formula (I): 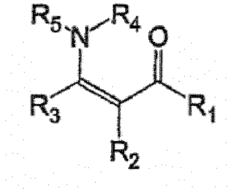 in which:
R₁ corresponds to a hydrogen, an alkyl or aryl radical;
R₂ corresponds to a hydrogen;
R₃ corresponds to a hydrogen, an alkyl or aryl radical;
R₄ corresponds to a hydrogen, an alkyl or aryl radical;
and
R₈ corresponds to a hydrogen.

5. The method as claimed in claim **1**, **characterized in that** the β-diketone/amine pair corresponds to the formula (II): 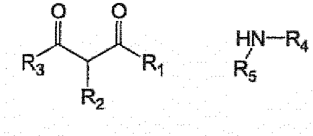 in which:
R₁ corresponds to a hydrogen, an alkyl or aryl radical;
R₂ corresponds to a hydrogen;
R₃ corresponds to a hydrogen, an alkyl or aryl radical;
R₄ corresponds to a hydrogen, an alkyl radical; and
R₈ corresponds to a hydrogen,
or a corresponding salt.

6. The method as claimed in claim **4** or **5**, in which R₁ and R₃ are independently a methyl, ethyl, isopropyl, butyl, isobutyl, *tert*-butyl, pentyl or phenyl radical and R₄ a hydrogen.

7. The method as claimed in claim **6**, in which R₁ is a methyl radical and R₃ a methyl or phenyl radical.

8. The method as claimed in any one of the preceding claims, **characterized in that** the nanoporous metal oxide sol-gel matrix is produced from at least one metal oxide of formula (IV):
M(X)ₘ(OR₈)ₙ(R₉)ₚ
in which:
M corresponds to a metal chosen from silicon, aluminum, titanium, zirconium, niobium, vanadium, yttrium and cerium;
R₈ and R₉ correspond independently to an alkyl or aryl radical;
n, m and p are integers, such that their sum is equal to the valency of M and that n is greater than or equal to 2; and
X is a halogen.

9. The method as claimed in claim **8**, **characterized in that** M is silicon or zirconium.

10. The method as claimed in claim **8** or **9**, **characterized in that** R₈ and R₉ are independently methyl or ethyl radicals.

11. The method as claimed in any one of claims **8** to **10**, **characterized in that** X is chlorine.

12. The method as claimed in claim **10**, **characterized in that** the metal oxide is Si(OMe)₄.

13. A material capable of reacting with at least one gaseous aldehyde, preferably formaldehyde, **characterized in that** it comprises a solid and transparent nanoporous metal oxide sol-gel matrix such as defined in any one of claims **8** to **12**, said matrix containing at least one probe molecule such as defined in any one of claims **1** to **7** bearing at least one functional group that is reactive with an aldehyde functional group, said reactive functional group being chosen from enaminones and the corresponding β-diketone/amine pairs or salts derived from these compounds.

14. The material as claimed in claim **13**, **characterized in that** the radicals R₈ and R₉ of the metal oxide are independently methyl or ethyl radicals and that the probe molecule is an enaminone.

15. The material as claimed in claim **14**, **characterized in that** the metal oxide is Si(OMe)₄ and the probe molecule is Fluoral-P.

16. A method for preparing a material capable of reacting with at least one aldehyde, **characterized in that** it comprises:
(a) a step of producing a nanoporous sol-gel matrix by polymerization of at least one metal oxide such as defined in any one of claims **8** to **12**,
(b) a step of incorporating into said nanoporous sol-gel matrix or into said at least one metal oxide, at least one probe molecule such as defined in any one of claims **1** to **7.**

17. The method as claimed in claim **16**, **characterized in that** the step of producing the nanoporous sol-gel matrix (a) comprises a step of hydrolyzing at least one metal oxide, said hydrolysis step preferably being carried out in the presence of an organic solvent, especially including methanol or ethanol.

18. The method as claimed in claim **17**, **characterized in that** the hydrolysis step is carried out at a pH below 7.

19. The method as claimed in any one of claims **16** to **18**, **characterized in that** the steps (a) and (b) are carried out simultaneously.

20. The method as claimed in any one of claims **16** to **19**, **characterized in that** it additionally comprises a homogenization and/or drying step.

21. A sensor or specific device for aldehydes, preferably formaldehyde, **characterized in that** it comprises at least one material such as defined in any one of claims **13** to **15**, or obtained according to the method such as defined in any one of claims **16** to **20**, or implementing the detecting and/ or assaying and/ or trapping method such as defined in any one of claims **1** to **12.**

22. The sensor or device as claimed in claim **21**, **characterized in that** the material is deposited on a suitable substrate, preferably in the form of a thin film on a transparent substrate.

23. The sensor or device as claimed in either one of claims **21** or **22**, **characterized in that** it integrates at least one source of light excitation and a collector.
